# EUROPÄISCHE PATENTANMELDUNG

(11) **EP 1 814 208 A1**
(43) Veröffentlichungstag der Anmeldung: **01.08.2007**
(21) Anmeldenummer: 06002003.9
(22) Anmeldetag: 31.01.2006
(51) Int. Cl.: H02K 3/50, F16F 9/53

(54) **Schwingungsdämpfungssystem für Statorwicklungen**

(62) Teilanmeldung aus: 06025478.6
(71) Anmelder: SIEMENS AKTIENGESELLSCHAFT, 80333 München (DE)
(72) Erfinder: Beck, Ronald, Dr., 45475 Mülheim an der Ruhr (DE); Ehehalt, Ulrich, 45131 Essen (DE); Kowalski, Waldemar, 45472 Mülheim an der Ruhr (DE); Lehmann, Christoph, Dr., 47506 Neukirchen-Vluyn (DE); Richter, Christoph, Dr., 49477 Ibbenbüren (DE); Spiess, Karlheinz, 47445 Moers (DE)

(57) **Zusammenfassung**

Ein Schwingungsdämpfungssystem für Statorwicklungen umfasst eine Wicklung (2) eines Stators (1), welche an einem Stützbauteil (3) des Stators (1) unter Zwischenschaltung eines Dämpfungselementes (4) gehalten ist. Außerhalb des Stators (1) ist eine Steuervorrichtung (7) angeordnet, die in Zusammenwirkung mit einem im Stator (1) angeordneten Stellelement (5) eine Änderung der Dämpfungseigenschaften des Stators (1) ermöglicht.

## Beschreibung

Die Erfindung betrifft ein Schwingungsdämpfungssystem für Statorwicklungen. Ein solches System ist beispielsweise aus der EP 0 950 279 B1 bekannt.

Das System nach der EP 0 950 279 B1 verfolgt den Ansatz, die Eigenfrequenz der Wicklungen eines Stators durch geeignete mechanische Belastung der an einer Wicklungsabstützungsstrebe gehaltenen Statorwicklungen auf ein ausreichend hohes Maß einzustellen. Zu diesem Zweck umfasst das Schwingungsdämpfungssystem einen zwischen der Wicklungsabstützungsstrebe und den Wicklungen angeordneten Schubblock sowie mehrere die Wicklungen belastende Federn.

Der Erfindung liegt die Aufgabe zugrunde, ein Schwingungsdämpfungssystem für Statorwicklungen, insbesondere für Statorwicklungen von Generatoren, anzugeben, welches besonders wirksam ist.

Diese Aufgabe wird erfindungsgemäß gelöst durch ein Schwingungsdämpfungssystem mit den Merkmalen des Anspruchs 1. Dieses für einen Generator sowie für einen Motor geeignete System umfasst eine Wicklung eines Stators, welche an einem Stützbauteil des Stators unter Zwischenschaltung eines Dämpfungselementes gehalten ist. Außerhalb des Stators, insbesondere außerhalb des Generators beziehungsweise des Motors, ist eine Steuervorrichtung angeordnet, die in Zusammenwirkung mit einem im Stator angeordneten Stellelement eine Änderung der Dämpfungseigenschaften des Stators ermöglicht. Das Stellelement kann ein Teil des Dämpfungselementes oder mit diesem identisch sein. Ebenso ist es auch möglich, das Stellelement außerhalb des Dämpfungselementes derart anzuordnen, dass es eine Veränderung der mechanischen Belastung der Statorwicklungen und damit deren Schwingungseigenschaften ermöglicht. Bei einer Betätigung des Stellelementes mittels der extern angeordneten Steuervorrichtung ändert sich nicht notwendigerweise die Geometrie des Stellelementes. Vielmehr wird unter einem Stellelement im vorliegenden Fall jegliches Element verstanden, das zur gezielten Änderung der Schwingungseigenschaften des Stators, insbesondere der Statorwicklungen, geeignet ist.

Mindestens ein Dämpfungselement, insbesondere mehrere auch als Tilger bezeichnete Dämpfungselemente, sind vorzugsweise am Wickelkopf des Stators angeordnet. Damit ist eine im Allgemeinen von der Drehzahl des Rotors abhängige Reduktion der Schwingungsamplituden des Wickelkopfes möglich. Um in jedem Drehzahlbereich der elektrischen Maschine eine besonders gute Dämpfung zu erreichen, sind die Schwingungseigenschaften der Tilger, insbesondere deren Eigenfrequenz, in Stufen oder kontinuierlich einstellbar. Mit einer automatischen Erfassung und Verarbeitung sowohl der Rotordrehzahl als auch der Schwingungen im Stator ist ein adaptives System realisierbar, welches durch geeignete Ansteuerung des Stellelementes als Teil des Dämpfungssystems selbsttätig die Statorschwingungen minimiert.

Nach einer ersten Ausführungsform weist das Stellelement ein elektro- oder magnetorheologisches Element auf. Der Einsatz eines magnetorheologischen Fluids oder eines elektrorheologischen Fluids zur Schwingungsdämpfung ist prinzipiell beispielsweise aus der US 2005/0121269 A1 bekannt. Im vorliegenden Fall, beim Einsatz eines elektro- oder magnetorheologischen Fluids in einem Generator oder Elektromotor, ist es von besonderem Vorteil, dass elektrische oder magnetische Felder nicht gesondert erzeugt werden müssen, sondern beim Betrieb der Maschine ohnehin als typischerweise starke Wechselfelder vorhanden sind. Die ständige Variation der elektrischen und magnetischen Feldstärke im Generator beziehungsweise Motor bewirkt eine in entsprechender Weise verlaufende Veränderung der mechanischen Eigenschaften des Dämpfungselementes und damit eine besonders gute Dämpfungswirkung. Die Steuervorrichtung, welche eine Beeinflussung der Schwingungseigenschaften des Stators ermöglicht, kann mit einer Einrichtung, die beim Betrieb der elektrischen Maschine primär einem anderen Zweck dient, beispielsweise einer Leistungsregelung, identisch sein.

Nach einer zweiten Ausführungsform, welche mit der ersten Ausführungsform kombinierbar ist, weist das Stellelement ein piezoelektrisches Element als Aktor auf. Der den piezoelektrischen Effekt nutzende Aktor ist besonders zur Erzeugung hoher Kräfte geeignet. Darüber hinaus hat der Piezo-Aktor den Vorteil, dass er sehr schnelle Formänderungen ermöglicht. Damit kann der Belastungszustand einer Statorwicklung mittels des Aktors bedarfsgerecht mit einer Frequenz geändert werden, die der Frequenz der elektrischen Maschine, also des Generators oder des Motors, entspricht oder höher als die Drehzahl der elektrischen Maschine ist. Einzelne Piezo-Kristalle im Stellelement werden mit einer geeigneten Phasenverschiebung gegenüber den zu mindernden mechanischen Schwingungen des Stators angesteuert.

Auf besonders einfache Weise kann der piezoelektrische Effekt für Dämpfungszwecke genutzt werden, wenn die elektrischen Anschlüsse des Piezoelementes über einen Widerstand miteinander verbunden sind. Eine externe Ansteuerung des Piezoelementes, das heißt das Anlegen einer Spannung an das piezoelektrische Element, ist in diesem Fall nicht erforderlich. Die eine Formänderung des Piezoelementes bewirkende und damit eine Spannung erzeugende mechanische Energie wird im elektrischen Widerstand in Wärme umgesetzt. Vorzugsweise ist der Widerstand einstellbar. Hierdurch sind die Dämpfungseigenschaften des Stellelementes gezielt beinflussbar, ohne das Stellelement von außen mit elektrischer Energie zu versorgen.

Unabhängig davon, ob das Piezoelement aktiv angesteuert ist, ist es vorzugsweise in einem schlauchartigen Hohlkörper aus einem Isolierstoff angeordnet. Dieser schlauchartige, nachgiebige, bevorzugt mit einem Glasfasergewebe ummantelte Hohlkörper bildet in vorteilhafter Ausgestaltung ein energieverzehrendes Abstandselement zwischen benachbarten Ständerstäben des Stators. Durch den Einschluss der piezoelektrischen Kristalle in einem Hohlkörper ist auch eine Ganztränkung der Abstandselemente möglich.

Die der Erfindung zugrunde liegende Aufgabe wird weiter gelöst durch ein Schwingungsdämpfungssystem mit den Merkmalen des Anspruchs 6. In diesem System ist ein Dämpfungselement, welches zwischen Wicklungen eines Stators und ein starres Stützbauteil geschaltet oder innerhalb einer Wicklung angeordnet ist, mit Partikeln befüllt, wodurch die Dämpfungseigenschaften erzeugt oder verbessert werden. Eine Vorrichtung, in der in einen Hohlraum gefüllte Partikel, nämlich ein körniger Feststoff, eine dämpfende Wirkung haben, ist grundsätzlich beispielsweise aus der DE 103 58 292 B3 bekannt.

Vorzugsweise hat auch das mit Partikeln befüllte Dämpfungselement fernbetätigt verstellbare Dämpfungseigenschaften. In einer besonders vorteilhaften Ausgestaltung sind die Partikel in einem Fluid verteilt, welches elektrorheologische oder magnetorheologische Eigenschaften hat.

Die der Erfindung zugrunde liegende Aufgabe wird ferner gelöst durch ein Schwingungsdämpfungssystem mit den Merkmalen des Anspruchs 8. Hierbei ist an einem zumindest im Wesentlichen rotationssymmetrischen Stützbauteil eines Stators, insbesondere eines Wickelkopfes, mindestens ein schwingungsdämpfender Tilger gehalten, welcher orthogonal zur Achse des Stützbauteils auslenkbar ist. Vorzugsweise sind am Umfang des Stützbauteils mehrere Tilger befestigt, welche in bevorzugter Ausgestaltung adaptive Eigenschaften aufweisen. Dabei kommen in vorteilhafter Weise einzelne oder Kombinationen der vorstehend erläuterten Technologien der Schwingungsdämpfung, insbesondere die magneto- oder elektrorheologische Dämpfung sowie die piezoelektrische Dämpfung zum Einsatz.

In jedem der aufgeführten Schwingungsdämpfungssysteme sind besonders ausgeprägte schwingungstilgende Eigenschaften durch eine unsymmetrische Geometrie des Statorwicklungen tragenden Stützbauteils erzielbar. Eine Resonanzen des Stators entgegenwirkende Unsymmetrie kann beispielsweise durch Aussparungen und/oder Verstärkungen des Stützbauteils sowie durch die Art der Befestigung an einer Umgebungskonstruktion, insbesondere am Gehäuse des Stators, gegeben sein.

Der Vorteil der Erfindung liegt insbesondere darin, dass durch die bevorzugt von außen, auch während des laufenden Betriebes, einstellbare Unterdrückung von Vibrationen in einem Statorwickelkopf dessen mechanische Beanspruchung verringert und damit dessen Lebensdauer verlängert wird. Insbesondere wird die Bildung von Reibstaub vermieden sowie die Lösung des Wickelkopfverbandes des Stators verhindert.

Nachfolgend werden mehrere Ausführungsbeispiele der Erfindung anhand einer Zeichnung näher erläutert. Hierin zeigen jeweils in symbolisierter Darstellung:
- FIG 1: ausschnittsweise einen Stator mit einem Dämpfungselement mit verstellbaren Dämpfungseigenschaften,
- FIG 2: ein ein piezoelektrisches Stellelement aufweisendes Dämpfungselement für einen Stator,
- FIG 3: in einer Ansicht analog FIG 1 einen Stator mit einem partikelbefüllten Dämpfungselement,
- FIG 4: in einer Detailansicht ein zwischen zwei Ständerstäben eines Stators angeordnetes partikelbefülltes Dämpfungselement,
- FIG 5 und 6: einen Stator mit einem Wickelkopf mit mehreren Tilgern,
- FIG 7 bis 10: ein Schwingungsdämpfungssystem mit piezo-elektrischen Dämpfungselementen,
- FIG 11 und 12: jeweils ein Ausführungsbeispiel eines Stators mit elektro-oder magnetorheologischer Dämpfung, und
- FIG 13 und 14: eine Vorrichtung zur Dämpfung von Statorschwingungen mittels Partikelfüllung.

Einander entsprechende oder gleichwirkende Teile sind in allen Figuren mit den gleichen Bezugszeichen gekennzeichnet.

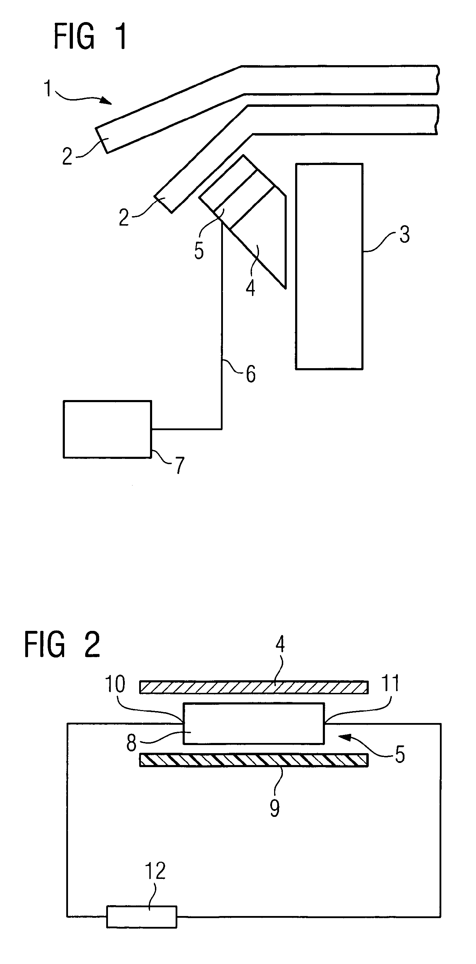

In FIG 1 ist grob schematisiert ein Ausschnitt aus einem Stator 1 eines Generators dargestellt. Hinsichtlich des prinzipiellen Aufbaus sowie der Funktion des Stators 1 wird auf die EP 0 950 279 B1 verwiesen. Eine Wicklung 2 ist auf einem Stützbauteil 3 unter Zwischenschaltung eines Dämpfungselementes 4 gehalten. Abweichend von der symbolisierten Darstellung sind die Teile 2,3,4 des Stators 1 kraftübertragend miteinander gekoppelt. In das Dämpfungselement 4 ist ein Stellelement 5 integriert, welches über eine Leitung 6 mit einer Steuervorrichtung 7 verbunden ist, die außerhalb des Generators angeordnet ist. An Stelle der Leitung 6 kann alternativ jegliche andere Form der Daten- und/oder Energieübertragung vorgesehen sein.

Das Stellelement 5 ist beispielsweise ein hydraulisches Stellglied, welches die mechanische Vorspannung des Dämpfungselementes 4 und damit die Eigenfrequenz der Wicklung 2 ändern kann. Hierbei ist die Eigenfrequenz um so höher, je höher die mittels des Dämpfungselementes 4 auf die Wicklung 2 aufgebrachte Kraft ist. Die Verstellung des Stellelementes 5 kann jederzeit, auch während des Betriebs des den Stator 1 aufweisenden Generators, erfolgen. Bevorzugt ist das Stellelement 5 kontinuierlich verstellbar. Es wird über die Steuervorrichtung 7 derart eingestellt, dass die Eigenfrequenz der Wicklung 2 ausreichend weit über der Frequenz der die Schwingung anregenden magnetischen Kraft liegt. Die Verstellung der Eigenschaften des Dämpfungselementes 4 kann manuell oder automatisch erfolgen. In jedem Fall ist ein adaptives System der Schwingungstilgung gegeben. Die Steifigkeit des im Stator eingebauten Dämpfungselementes 4 kann auch in diskreten Schritten verstellbar sein.

Zusätzlich zu einem hydraulischen Stellglied oder statt eines solchen Aktors weist das Stellelement 5 in vorteilhafter Ausgestaltung eine Füllung mit einem elektro- oder magnetorheologischen Fluid auf. Insbesondere in diesem Fall kann das Stellelement 5 mit dem Dämpfungselement 4 identisch sein.

Eine weitere Ausgestaltung wird im Folgenden anhand Figur 2 erläutert. Hierbei umfasst das in das Dämpfungselement 4 integrierte Stellelement 5 ein piezoelektrisches Element 8. Dieses ist in einem schlauchartigen Hohlkörper 9 aus Isolierstoff, beispielsweise einem flexiblen Kunststoffrohr oder einem Schlauch aus Glasfasergewebe, angeordnet. Die elektrischen Anschlüsse 10,11 des piezoelektrischen Elementes 8 sind über einen Widerstand 12 miteinander verbunden. Ändert sich aufgrund einer Schwingung in der Wicklung 2 die mechanische Belastung des Dämpfungselementes 4, so dass das piezoelektrische Element 8 komprimiert, expandiert oder in sonstiger Weise verformt wird, induziert dies eine elektrische Spannung zwischen den Anschlüssen 10,11 und damit einen Stromfluss durch den Widerstand 12. In nicht gezeigter Weise befindet sich innerhalb des Hohlkörpers 9 eine Vielzahl an piezoelektrischen Elementen 8.

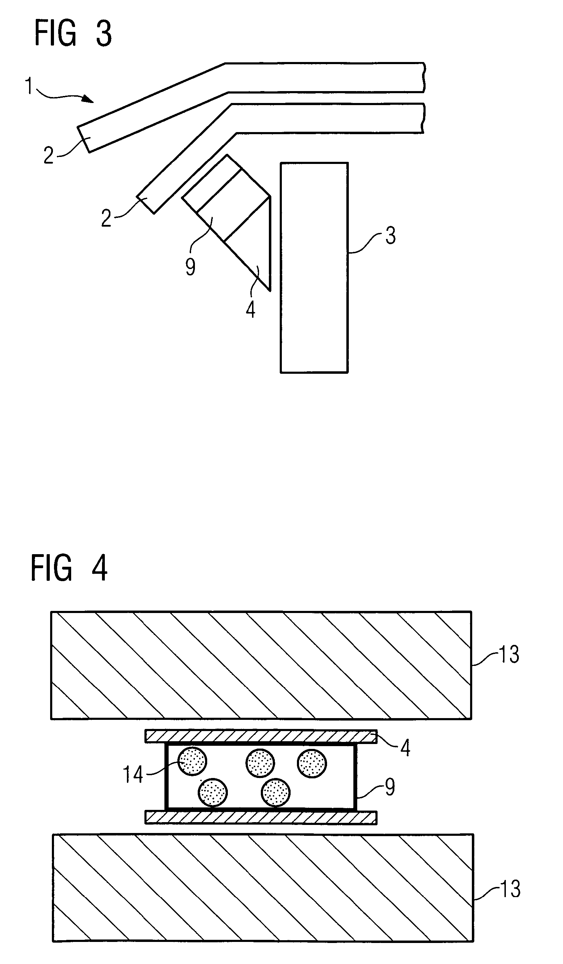

Die FIG 3 zeigt in einer Darstellung analog FIG 1 ebenfalls einen Ausschnitt aus einem Stator 1, nämlich einen Teil des Wickelkopfes des Stators 1. In diesem Fall erfolgt eine Dämpfung von Statorschwingungen mittels eines partikelbefüllten Dämpfungselementes 4, welches in Figur 4, allerdings in einer anderen Einbausituation, näher dargestellt ist. Zwischen zwei in FIG 4 ausschnittsweise sichtbaren Ständerstäben 13 des Stators 1 befindet sich ein mit Partikeln 14 befüllter Hohlkörper 9 als Dämpfungselement 4. Beispielsweise ist Sand als Partikelfüllung des Dämpfungselementes 4 verwendbar. Bei Schwingungen der Ständerstäbe 13 werden die einzelnen Partikel 14, welche bevorzugt mit einem Fluid, beispielsweise Öl, vermischt sind, gegeneinander verschoben, so dass durch die auftretende Reibung mechanische Energie, nämlich Schwingungsenergie, in Wärme umgesetzt wird.

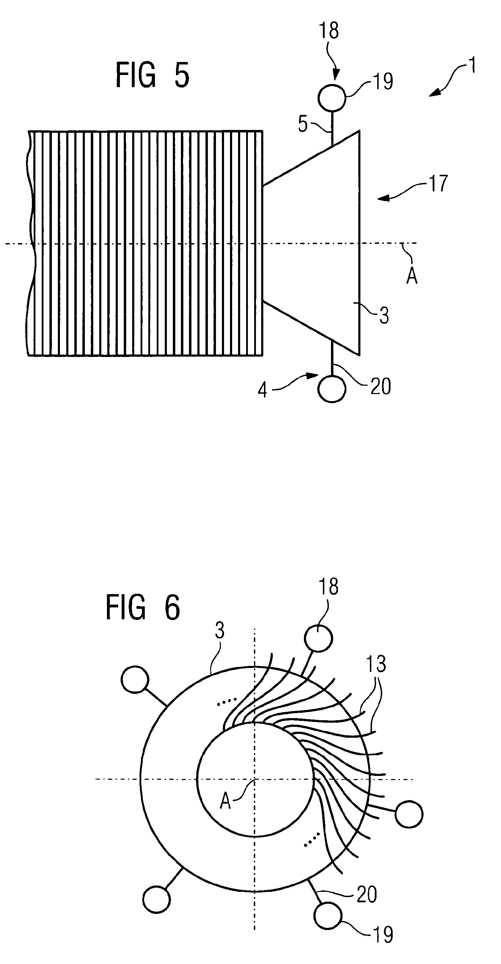

Ein weiteres System zur Schwingungsdämpfung in einem Stator einer elektrischen Maschine zeigen die Figuren 5 und 6 in einer Seiten- beziehungsweise Frontansicht. Am Umfang eines Stützbauteils 3 eines Wickelkopfes 17 des Stators 1 sind mehrere Tilger 18 befestigt. Jeder dieser Tilger 18 weist einen in der schematischen Darstellung als Kugel eingezeichneten Trägheitskörper 19 auf, der mittels eines nachgiebigen Dämpfungsstabes 20 am Stützbauteil 3, welches im Wesentlichen rotationssymmetrisch zu einer Achse A ausgebildet ist, gehalten ist. Die Trägheitskörper 19 sind damit insbesondere orthogonal zur Achse A des Stützbauteils 3, jedoch auch in andere Raumrichtungen auslenkbar. Die Gesamtheit der Tilger 18 ist somit geeignet, jeglicher Form anregender Schwingungen, die insbesondere auf die zwischen Rotor und Stator 1 wirkenden elektromagnetischen Kräfte zurückzuführen sind, entgegenzuwirken.

In nicht in den Figuren 5 und 6 ersichtlicher Weise handelt es sich bei den Trägheitskörpern 19 bevorzugt um adaptive Dämpfer, deren Eigenschaften mittels der Steuervorrichtung 7 (FIG 1) veränderbar sind.

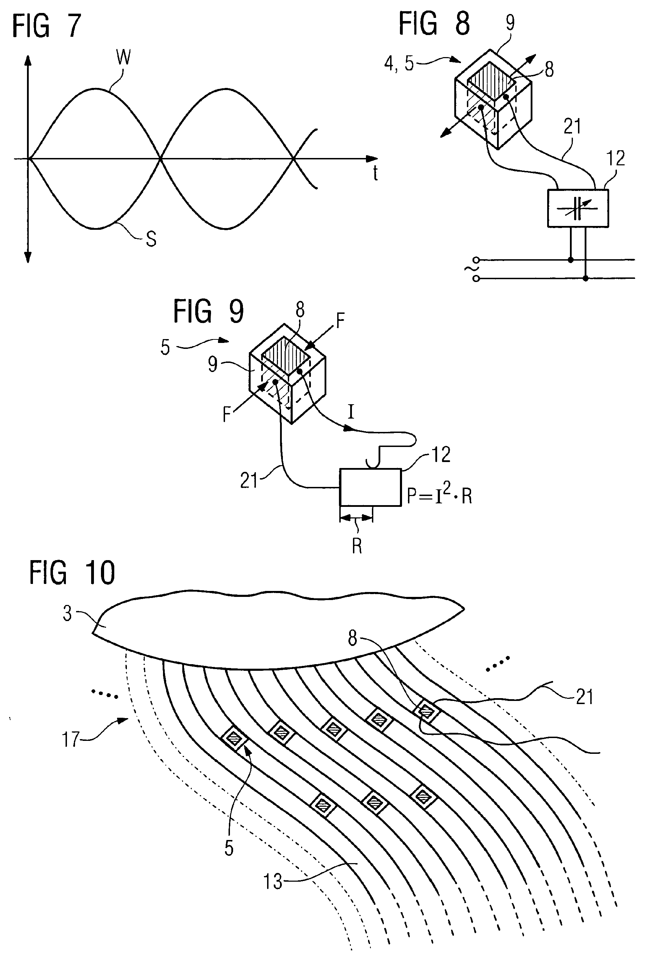

Die Figuren 7 bis 10 nehmen Bezug auf die Figur 2, die ebenfalls ein piezoelektrisches Schwingungsdämpfungssystem betrifft. In Figur 7 ist in einem Diagramm in idealisierter Weise eine durch elektromagnetische Kräfte angeregte Schwingung W eines Ständerstabs 13 des Wickelkopfes 17 (vgl. FIG 6) sowie eine um 180° phasenversetzte, ebenso sinusförmige Schwingung S eines piezoelektrischen Elementes 8 dargestellt. Die Anschlüsse 10, 11 des piezoelektrischen Elementes 8 sind, wie aus den Figuren 8 und 9 ersichtlich, über Anschlussleitungen 21 an einen veränderbaren elektrischen Widerstand 12 angeschlossen. Der Hohlkörper 9, in dem sich das piezoelektrische Element 8 befindet, hat die Form eines Kubus, welcher durch Kräfte F beaufschlagt wird, die zwischen den in Figur 10 sichtbaren Ständerstäben 13 wirken. Somit fungiert das das piezoelektrische Element 8 aufweisende Stellelement 5 als energieverzehrendes Abstandselement zwischen den Ständerstäben 13 des Stators 1.

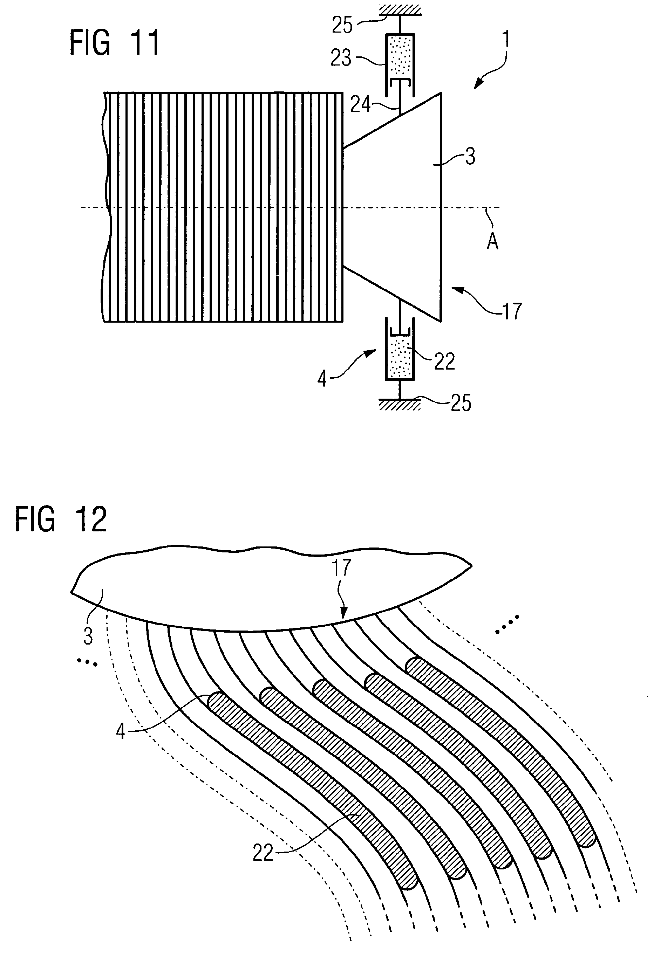

Die Figuren 11 und 12 zeigen verschiedene Möglichkeiten der Verwendung elektro- oder magnetorheologischer, mit einem entsprechende Eigenschaften aufweisenden Fluid 22 befüllter Dämpfungselemente 4 in einem Stator 1. Im Ausführungsbeispiel nach Figur 11 sind Dämpfungselemente 4, welche einen in einem Zylinder 23 verschieblichen Kolben 24 umfassen, einerseits am Stützbauteil 3 und andererseits an einem starren Gehäuse 25 des Stators 1 angelenkt. Nach Figur 12, welche eine mit den Merkmalen nach Figur 11 kombinierbare Ausführungsform zeigt, sind mit einem elektro- oder magnetorheologischen Fluid 22 gefüllte Dämpfungselemente 4 schlauchförmig ausgebildet und jeweils zwischen Ständerstäben 13 des Stators 1 angeordnet.

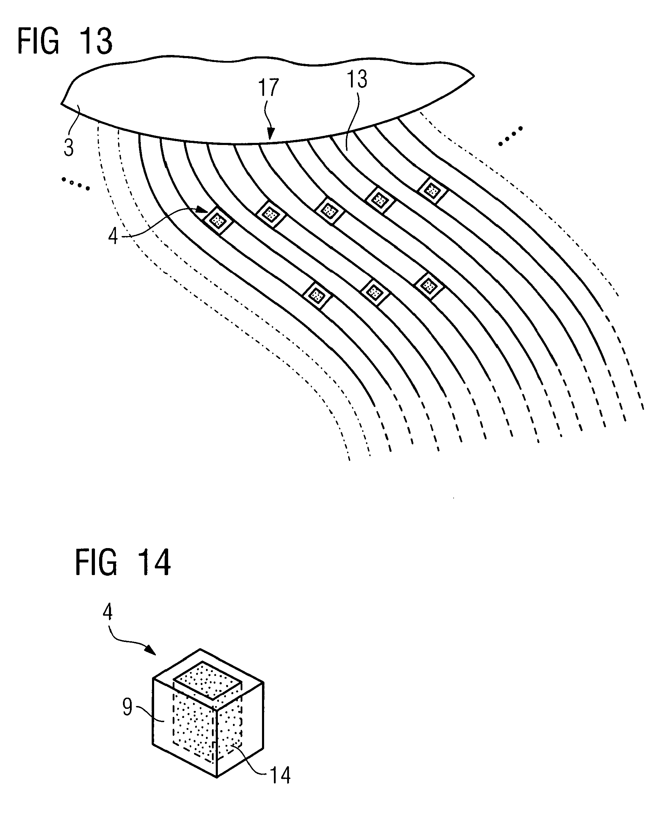

Im Ausführungsbeispiel nach den Figuren 13 und 14 weisen die Dämpfungselemente 4, ähnlich wie im Ausführungsbeispiel nach den Figuren 7 bis 10, eine kubische Form auf. Abweichend von dieser Darstellung sind beispielsweise auch zylindrische Formen der Hohlkörper 9 möglich. Wie im symbolisierten Ausführungsbeispiel nach FIG 4 ist der in Figur 14 separat dargestellte Hohlkörper 9 mit Partikeln 14, beispielsweise mit Sand, befüllt. Die Partikel 14 sind in einem Fluid, insbesondere Wasser oder Öl, verteilt, wobei die schwingungsdämpfenden Eigenschaften des Dämpfungselementes 4 sowohl durch die Wahl des Fluids als auch durch Dichte, Größe und Reibkoeffizient der Partikel 14 einstellbar sind.

## Patentansprüche

1. Schwingungsdämpfungssystem für Statorwicklungen, wobei eine Wicklung (2) eines Stators (1) an einem Stützbauteil (3) des Stators (1) unter Zwischenschaltung eines Dämpfungselementes (4) gehalten ist,
**gekennzeichnet durch** eine außerhalb des Stators (1) angeordnete Steuervorrichtung (7), welche in Zusammenwirkung mit einem im Stator (1) angeordneten Stellelement (5) eine Änderung der Dämpfungseigenschaften des Stators (1) ermöglicht.

2. Schwingungsdämpfungssystem nach Anspruch 1,
**dadurch gekennzeichnet, dass**
das Stellelement (5) ein elektro- oder magnetorheologisches Element umfasst.

3. Schwingungsdämpfungssystem nach Anspruch 1 oder 2,
**dadurch gekennzeichnet, dass**
das Stellelement (5) ein piezoelektrisches Element (8) umfasst.

4. Schwingungsdämpfungssystem nach Anspruch 3,
**dadurch gekennzeichnet, dass**
das piezoelektrische Element (8) in einem schlauchartigen Hohlkörper (9) aus einem Isolierstoff angeordnet ist.

5. Schwingungsdämpfungssystem nach Anspruch 3 oder 4,
**dadurch gekennzeichnet, dass**
elektrische Anschlüsse (10,11) des piezoelektrischen Elementes (8) über einen Widerstand (12) miteinander verbunden sind.

6. Schwingungsdämpfungssystem für Statorwicklungen, wobei eine Wicklung (2) eines Stators (1) an einem Stützbauteil (3) des Stators (1) unter Zwischenschaltung eines Dämpfungselementes (4) gehalten ist,
**dadurch gekennzeichnet, dass**
das Dämpfungselement (4) mit dämpfenden Partikeln (14) befüllt ist.

7. Schwingungsdämpfungssystem nach Anspruch 6,
**dadurch gekennzeichnet, dass**
die Partikel (14) in einem Fluid verteilt sind.

8. Schwingungsdämpfungssystem für Statorwicklungen, wobei an einem zumindest im Wesentlichen rotationssymmetrischen Stützbauteil (3) eines Stators (1) mindestens ein schwingungsdämpfender Tilger (18) gehalten ist, welcher orthogonal zur Achse (A) des Stützbauteils (3) auslenkbar ist.

9. Schwingungsdämpfungssystem nach Anspruch 8,
**dadurch gekennzeichnet, dass**
eine Mehrzahl an Tilgern (18) am Stützbauteil (3) des Stators (1), insbesondere eines Wickelkopfes (17), befestigt ist.

## Geänderte Patentansprüche

### Geänderte Patentansprüche gemäss Regel 86(2) EPÜ.

**1.** Schwingungsdämpfungssystem für Statorwicklungen,
wobei eine Wicklung (2) eines Stators (1) an einem Stützbauteil (3) des Stators (1) unter Zwischenschaltung eines Dämpfungselementes (4) gehalten ist, umfassend eine außerhalb des Stators (1) angeordnete Steuervorrichtung (7), welche in Zusammenwirkung mit einem im Stator (1) angeordneten Stellelement (5) eine Änderung der Dämpfungseigenschaften des Stators (1) ermöglicht.
**dadurch gekennzeichnet, dass**
das Stellelement (5) ein elektro- oder magnetorheologisches Element umfasst.
